(19) Europäisches Patentamt
European Patent Office
Office européen des brevets

(11) Veröffentlichungsnummer : **0 029 091**
B1

# (12) EUROPÄISCHE PATENTSCHRIFT

(45) Veröffentlichungstag der Patentschrift :
20.08.86

(21) Anmeldenummer : 80105073.3

(22) Anmeldetag : 27.08.80

(51) Int. Cl.⁴ : **G 01 F 23/24**

(54) Einrichtung zum elektrischen Überwachen des Niveau einer in einem Behälter enthaltenen Flüssigkeit.

(30) Priorität : 19.11.79 DE 2946585

(43) Veröffentlichungstag der Anmeldung :
27.05.81 Patentblatt 81/21

(45) Bekanntmachung des Hinweises auf die Patenterteilung : 20.08.86 Patentblatt 86/34

(84) Benannte Vertragsstaaten :
DE FR GB SE

(56) Entgegenhaltungen :
US-A- 3 302 458
US-A- 4 163 391

(73) Patentinhaber : VDO Adolf Schindling AG
Gräfstrasse 103
D-6000 Frankfurt/Main (DE)

(72) Erfinder : Hauschild, Wolfgang
Kastanienhain 29
D-6232 Bad Soden 3 (DE)
Erfinder : Baumgart, Hans Jürgen
Marktplatz 6
D-6231 Schwalbach (DE)

(74) Vertreter : Könekamp, Herbert, Dipl.-Ing.
Sodener Strasse 9
D-6231 Schwalbach (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Einrichtung zum elektrischen Überwachen des Niveaus einer in einem Behälter enthaltenen Flüssigkeit nach dem Oberbegriff des Patentanspruchs 1.

Eine derartige bekannte Einrichtung (DE-OS 27 40 289) geht davon aus, daß das Niveau der in einem Behälter enthaltenen Flüssigkeit durch Messung der Veränderung des Widerstandswerts eines metallischen Widerstandselements in Abhängigkeit von der Temperatur, die er bei einem definierten Stromdurchfluß annimmt, gemessen werden kann. Die mittlere Temperatur der Widerstandssonde hängt davon ab, welcher Teil seiner Gesamtlänge in die Flüssigkeit eintaucht, weil der eintauchende Abschnitt stärker abgekühlt wird als der in der Luft befindliche Abschnitt. Der Gesamtwiderstand der Widerstandssonde hängt daher von dem Flüssigkeitsniveau ab. Da bereits festgestellt wurde, daß dieses Meßprinzip sehr empfindlich gegen Schwankungen der Umgebungstemperatur ist, wurde die Einrichtung nach dem Stand der Technik bereits so ausgebildet, daß das Meßergebnis unabhängiger gegen Schwankungen der Umgebungstemperatur wird. Hierzu wurde der mittlere Widerstand, den die Widerstandssonde nach Stromdurchfluß annimmt, bezogen auf einen mittleren Widerstandswert zu einem Anfangszeitpunkt, zu dem die Widerstandssonde noch nicht durch den Strom aufgeheizt wurde. Damit wurde versucht, den Einfluß der Umgebungstemperatur insofern auszuschalten, als die Anfangsspannung, die zu dem Anfangszeitpunkt an der Widerstandssonde abfällt, in gleicher Weise von einer Beeinflussung durch die Umgebungstemperatur abhängt, wie die Meßtemperatur, welche die Widerstandssonde zu einem späteren definierten Zeitpunkt nach Anschluß der Konstantstromquelle annimmt. Im einzelnen soll eine auf diesem Vergleichsmeßprinzip arbeitende bekannte Ausführungsform das Ermitteln mehrerer unterschiedlicher Flüssigkeitsstände mit einem Anzeigeorgan ermöglichen. Hierzu umfaßt die Einrichtung eine Konstantstromquelle für die Widerstandssonde, an deren Anschlüssen die Anfangsspannung zu einem Anfangszeitpunkt und die Meßspannung zu einem späteren definierten Zeitpunkt entnommen werden. Die Anfangsspannung wird in einem Speicher gespeichert. Wenn zu dem definierten späteren Zeitpunkt die Meßspannung vorliegt, wird die Differenz zwischen der Meßspannung und der Anfangsspannung in einer Subtraktionsschaltung ermittelt. Die Differenz kann anschließend mit bestimmten vorgegebenen Spannungen verglichen werden, die verschiedenen Eintauchniveaus der Widerstandssonde entsprechen, um je nach dem Vergleichsergebnis eine Anzeige oder einen Alarm auszulösen.

Es hat sich jedoch herausgestellt, daß mit diesen bekannten Einrichtungen trotz des Vergleichsprinzips, in dem die Meßspannung mit einer Anfangsspannung verglichen wird, unzutreffende Flüssigkeitsniveaus gemessen wurden.

Zu der vorliegenden Erfindung gehört daher die Aufgabe, eine Einrichtung zum elektrischen Überwachen des Niveaus einer in einem Behälter enthaltenen Flüssigkeit der eingangs genannten Gattung so weiterzuentwickeln, daß die Meßgenauigkeit weiter erhöht wird.

Die erfindungsgemäße Lösung dieser Aufgabe durch eine Weiterentwicklung der Einrichtung mit den im Patentanspruch 1 angegebenen Merkmalen beruht auf der Erkenntnis, daß trotz des Vergleichsmeßprinzips Änderungen der Umgebungstemperatur fehlerhafte Messungen des Niveaus bewirken, weil höhere Temperaturen durch Ausdehnung der Flüssigkeit einen höheren Füllstand hervorrufen, obwohl die Füllmenge konstant ist, und weil sich in Abhängigkeit von der Temperatur der Flüssigkeit der Wärmeübergang zwischen der Widerstandssonde und der Flüssigkeit ändert. Die erste Fehlerquelle wird besonders in automatischen Getrieben von Kraftfahrzeugen spürbar, da sich die Getriebe im Betrieb erheblich erwärmen. Der Niveauanstieg durch die Ausdehnung der Getriebeflüssigkeit ist nicht nur temperatur- und füllmengenabhängig, sondern hängt unter Umständen von der Konstruktion des Getriebes ab. Die unterschiedlichen Wärmeübergänge zwischen Widerstandssonde und Flüssigkeit in Abhängigkeit von der Temperatur der Flüssigkeit verursachen verschiedene Anstiegsgeschwindigkeiten der mittleren Temperatur bzw. des mittleren Widerstandswertes der Widerstandssonde in Abhängigkeit von der Zeit, was, da die Widerstandssonde mit Konstantstromimpulsen gespeist wird, ebenfalls zu einer Verfälschung des Meßergebnisses führt.

Durch die nach der der Erfindung zugrundeliegenden Erkenntnis vorgesehenen Mittel zum Ausgleich des Einflusses der Niveauänderung der Flüssigkeit durch Wärmeausdehnung in Abhängigkeit von ihrer Anfangstemperatur auf die Anzeigespannung und Mittel zum Ausgleich unterschiedlichen Wärmeübergangs von der Widerstandssonde auf die Flüssigkeit in Abhängigkeit von der Anfangstemperatur kann eine praktisch exakte Niveaumessung unter Beibehaltung des wenig aufwendigen Meßprinzips mit der Widerstandssonde erreicht werden. Die zusätzlichen Korrekturmittel zum Ausgleich des Einflusses der Niveauänderung und des unterschiedlichen Wärmeübergangs verursachen, wenn sie geeignet gewählt werden, ebenfalls keinen zu hohen Aufwand, um diese Einrichtung in vielen Anwendungsfällen, beispielsweise zur Niveaumessung des Flüssigkeitsstands in einem automatischen Getriebe eines Kraftfahrzeugs einsetzen zu können.

Vorteilhafte Weiterbildungen der Einrichtung werden in den abhängigen Ansprüchen angegeben.

Im Rahmen einer ersten speziellen Ausbildung der erfindungsgemäßen Einrichtung nach Anspruch 2 ist als Mittel zum Ausgleich der Niveauänderung in der in dem kennzeichnenden Teil des Patentanspruchs 2 angegebenen Weise gestaltet.

Diese Meßsonde ist zum Einsatz in einen Behälter in der in dem Patentanspruch 3 angegebenen Weise bestimmt.

Damit wird erreicht, daß für die maximale Umgebungstemperatur, wenn die Differenz zwischen der Meßspannung und der Anfangsspannung zu groß ist, diese Differenz kleiner bewertet wird.

Zu der Ausbildung und Anordnung der Widerstandssonde nach den Patentansprüchen 3 und 4 gehört als Mittel zum Ausgleich unterschiedlichen Wärmeübergangs von der Widerstandssonde auf die Flüssigkeit eine analoge Rechenschaltungsanordnung mit den im kennzeichnenden Teil des Patentanspruchs 4 angegebenen Merkmalen. Mit dieser analogen Rechenschaltungsanordnung wird in wenig aufwendiger Weise eine Linearisierung der Anzeigespannung des Füllstands in Abhängigkeit von der Umgebungstemperatur in der Weise erreicht, daß die korrigierte Anzeigespannung über den gesamten praktisch vorkommenden Bereich der Umgebungstemperatur konstant bleibt. Diese Linearisierung wird für beliebige Füllstände erzielt, da durch den voranstehend angegebenen Aufbau der Widerstandssonde der Verlauf der ursprünglichen Anzeigespannung in Abhängigkeit von der Umgebungstemperatur mit gleicher Steigung und Krümmung erfolgt. D. h. alle Kennlinien der ursprünglichen Anzeigespannung in Abhängigkeit von der Umgebungstemperatur mit dem tatsächlichen Füllstand als Parameter verlaufen parallel zueinander. Diese Einrichtung ist deswegen verhältnismäßig wenig aufwendig, da zur Korrektur der ursprünglichen Anzeigespannung nur die konstante Referenzspannung und die Anfangsspannung an der Widerstandssonde vorzusehen sind, wobei die Anfangsspannung nach dem hier verwendeten Meßprinzip ohnehin gebildet werden muß.

Die Steuerung der Mittel zum Ausgleich unterschiedlichen Wärmeübergangs von der Widerstandssonde auf die Flüssigkeit erfolgt zweckmäßig nach Patentanspruch 5. Damit wird in umkomplizierter Weise sichergestellt, daß die Anfangsspannung zur Korrektur des später gemessenen Meßwerts ermittelt und festgehalten wird.

Die Erfindung wird im folgenden anhand der Zeichnung mit 5 Figuren erläutert. Es zeigt :

Figur 1  die Kennlinien der unkorrigierten Anzeigespannung in Abhängigkeit von der Temperatur der Flüssigkeit für maximales und minimales Niveau der Flüssigkeit (Kurvenparameter),

Figur 2  den Verlauf der korrigierten Anzeigespannung in Abhängigkeit von der Temperatur für die Kurven gemäß Anspruch 2,

Figur 3  eine schematische Darstellung der zur Korrektur verwendeten Widerstandssonde,

Figur 4  ein Blockschaltbild der zur Korrektur zum Ausgleich unterschiedlicher Wärmeübergänge von der Widerstandssonde nach Figur 3 vorgesehenen Schaltungsanordnung,

Figur 5  eine Variante der Schaltungsanordnung nach Figur 4, in der insbesondere die Steuermittel in dem Blockschaltbild dargestellt sind, und

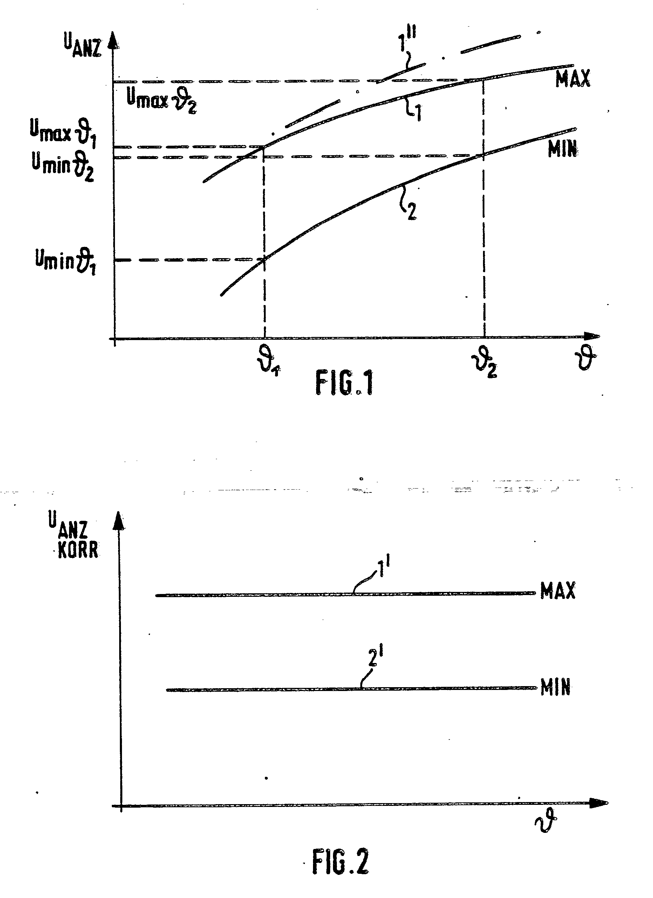

In Figur 1 ist die Abhängigkeit einer Anzeigespannung $U_{ANZ}$ in Abhängigkeit von der Flüssigkeitstemperatur $\vartheta$, deren Niveau gemessen werden soll, für eine Kurve des maximalen Füllstands 1 und eine Kurve des minimalen Füllstands 2 dargestellt. Die Anzeigespannung $U_{ANZ}$ ist dabei so gebildet, daß die Differenzspannung zwischen der Anfangsspannung an der Widerstandssonde und der Meßspannung zu einem definierten späteren Zeitpunkt nach einem Stromdurchfluß durch die Widerstandssonde erzeugt wird und daß diese Differenzspannung umgekehrt wird.

Aus Figur 1 ist ersichtlich, daß die unkorrigierte Anzeigespannung für den minimalen Füllstand entsprechend der Kurve 2 stets unterhalb der Kurve der unkorrigierten Anzeigespannung für den maximalen Füllstand entsprechend Kurve 1 verläuft, daß aber die Steigung der Kurve 1 für den maximalen Füllstand insbesondere in dem Bereich relativ großer Temperaturen geringer ist als diejenige der Kurve 2 für minimalen Füllstand.

Angestrebt wird ein Kurvenverlauf gemäß Figur 2, in der die Kennlinie der korrigierten Anzeigespannung $U_{ANZ}$ in Abhängigkeit von der Temperatur $\vartheta$ für maximale Füllmenge entsprechend der Linie 1' und für die minimale Füllmenge entsprechend der Geraden 2' unabhängig von der Temperatur ist.

Bei dem Kurvenverlauf nach Figur 2 tritt insbesondere die störende Erscheinung nach dem Kurvenverlauf in Figur 1 nicht mehr auf, daß die Differenz zwischen der unkorrigierten Anzeigespannung für minimalen und maximalen Füllstand bei kleiner Temperatur d größer ist als bei großer Temperatur d.

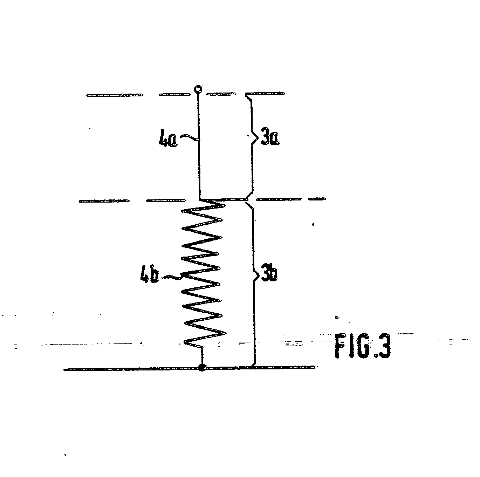

Für die Ausgestaltung der Widerstandssonde gemäß Figur 3 wird zur Herstellung der korrigierten Anzeigespannung gemäß Figur 2 zunächst der Kurvenverlauf der Kurve 1 demjenigen der Kurve 2 angeglichen. Diese insoweit veränderte Kurve 1 wird 1" genannt. Die Widerstandssonde gemäß Figur 3 besteht aus einem oberen Abschnitt 3a mit einer verhältnismäßig kleinen Länge des Widerstandsdrahts 4a und einem unteren Abschnitt mit einer verhältnismäßig großen Länge des Widerstandsdrahts 4b. Der Abschnitt 3a ist dabei so bemessen, daß er in den Bereich zwischen dem minimalen und dem maximalen Füllstand bei maximaler Temperatur der Flüssigkeit liegt. Der untere Abschnitt 3b schließt sich an den Abschnitt 3a nach unten an und befindet sich somit bei maximaler Temperatur immer innerhalb der Flüssigkeit. Damit wird erreicht, daß die Temperatur des oberen Abschnitts 3a mit einem verhältnismäßig geringen Gewicht in den mittleren Widerstand der Widerstandssonde eingeht, die Temperatur des unteren Abschnitts 3b hingegen mit einem verhältnismäßig großen Gewicht. Damit wird die Differenzspannung zwischen der Meßspannung und der Anfangsspannung bei maximaler Temperatur herabgesetzt und der Kurvenzug gemäß Kurve 1″ erreicht.

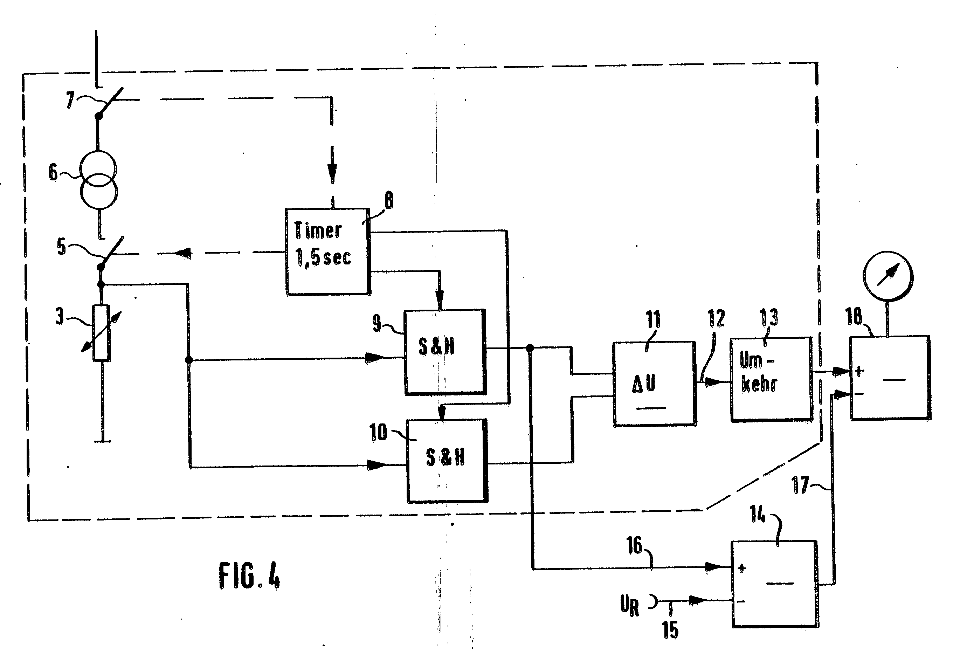

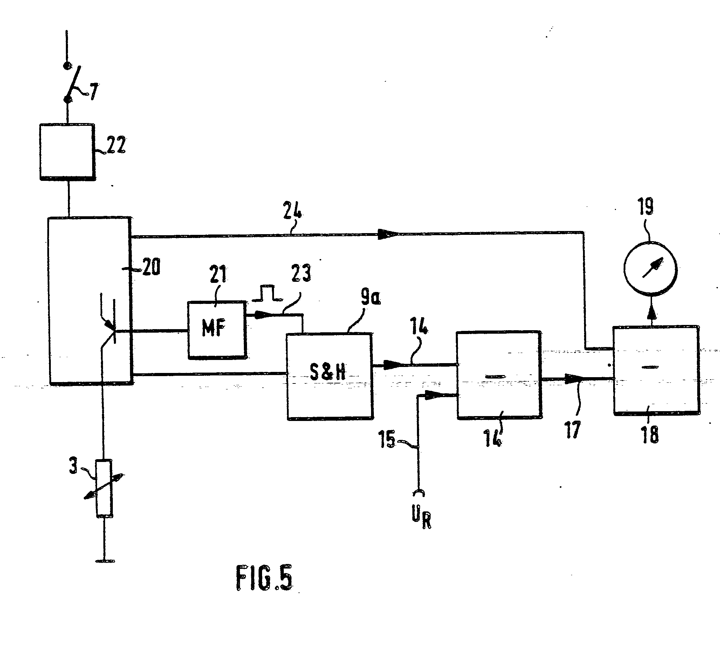

Zur Bildung der konstanten korrigierten Anzeigespannung gemäß den Geraden 1′ und 2′ in Figur 2 aus den Kurven 1″ und 2 sind die Schaltungsanordnungen nach Figur 4 oder 5 vorgesehen.

In Figur 4 ist mit 3 eine Sonde gemäß Figur 3 bezeichnet, die über einen Schalter 5 durch eine Konstantstromquelle 6 gespeist werden kann. In Reihe zu der Konstantstromquelle liegt ein Zündschalter 7. Zum Einschalten des Schalters 5 dient ein Zeitgeber 8, dessen Steuereingang mit dem Zündschalter 7 in Verbindung steht. Ein Ausgang des Zeitgebers steht mit einem ersten Mittel zum Erfassen und Speichern der Anfangsspannung an der Sonde 3 zum Anfangszeitpunkt in Verbindung. Ein zweites Mittel zum Erfassen und Speichern der Meßtemperatur zu einem definierten späteren Zeitpunkt, beispielsweise 1,5 Sekunden nach dem Anfangszeitpunkt, ist an einen zweiten Ausgang des Zeitgebers angeschlossen. Beide Mittel können durch sogenannte sample-and-hold-Schaltungsanordnungen realisiert werden. Der Ausgang des ersten und des zweiten Mittels zum Erfassen und Speichern der Anfangsspannung bzw. der Meßspannung 9 und 10 sind an eine Subtrahiereinrichtung 11 angeschlossen, an deren Ausgang 12 eine Differenzspannung aus der Anfangsspannung weniger der Meßspannung gebildet wird. Aus dieser Differenzspannung wird in einer Umkehreinrichtung 13 ein Reziprokwert gebildet, der die unkorrigierte Anzeigespannung darstellt.

Zur Bildung dieser unkorrigierten Anzeigespannung wird also nach Einschalten des Zündschalters 7 zunächst durch den Zeitgeber gesteuert die Anfangsspannung an der Sonde 3 in die Mittel 9 eingespeichert. Nach Schließen des Schalters 5 durch den Zeitgeber und Durchlauf eines Stromimpulses durch die Sonde 3 bis zum Meßzeitpunkt, bei dem der Schalter 5 wieder geöffnet wird, erfolgt das Erfassen der Meßspannung an der Sonde 3 — ebenfalls durch den Zeitgeber 8 gesteuert — in dem zweiten Mittel zum Erfassen 10. Aus den in den Mitteln 9 und 10 gespeicherten Spannungswerten wird dann wie angegeben die unkorrigierte Anzeigespannung errechnet.

Zur Korrektur der unkorrigierten Anzeigespannung ist zusätzlich eine Subtrahiereinrichtung 14 vorgesehen, in der von einer konstanten Referenzspannung $U_R$ an einem Eingang 15 die Anfangsspannung an einem Eingang 16 abgezogen und mit einem konstanten Faktor bewertet wird. Die derart gebildete Korrekturgröße, die am Ausgang 17 ansteht, wird in einer weiteren Subtrahiereinrichtung 18 von der unkorrigierten Anzeigespannung abgezogen, so daß mit dem Instrument 19 die korrigierte Anzeigespannung entsprechend dem aktuellen Füllstand unabhängig von der Temperatur der Flüssigkeit angezeigt wird.

In Figur 5 ist dargestellt, wie eine zusätzliche sample-and-hold-Schaltungsanordnung 9a, die die gleiche Funktion wie die Mittel 9 in Figur 4 hat, zur Bildung der korrigierten Anzeigespannung an die Einrichtung zur Bildung der unkorrigierten Anzeigespannung 20 angeschlossen ist. Die Einrichtung zur Erzeugung der unkorrigierten Anzeigespannung entspricht dabei dem in Figur 4 mit einer unterbrochenen Linie eingerahmten Teil. Übereinstimmende Elemente sind in den Figuren 4 und 5 mit gleichen Bezugszeichen versehen.

Aus Figur 5 ist ferner ersichtlich, daß durch eine monostabile Kippstufe 21 die sample-and-hold-Schaltungsanordnung 9a gesteuert wird. Gemäß Figur 5, in der eine zusätzliche Einschaltverzögerung 22 zur Verwendung einer speziellen Einrichtung zum elektrischen Überwachen des Niveaus zwischen diese Einrichtung und dem Zündschalter 7 eingeschaltet ist, wird die Anfangsspannung in die sample-and-hold-Schaltungsanordnung 9a durch einen kurzen Impuls auf der Leitung 23 gesteuert eingespeist. Die Anfangsspannung steht dann in der sample-and-hold-Schaltungsanordnung zur Bildung der Korrekturspannung in der Subtrahierspannung 14 zur Verfügung. Die unkorrigierte Anzeigespannung wird aus der Einrichtung 20 in die Subtrahiereinrichtung 18 eingespeist, in der die Differenz zwischen der unkorrigierten Anzeigespannung und der Korrekturspannung gebildet wird, so daß die korrigierte Anzeigespannung mit der Anzeigeeinrichtung 19 angezeigt werden kann.

**Patentansprüche**

1. Einrichtung zum elektrischen Überwachen des Niveaus einer in einem Behälter enthaltenen Flüssigkeit mit einer temperaturabhängigen Widerstandssonde (3), die in die Flüssigkeit eintaucht, deren Niveau überwacht werden soll, mit einer an die Widerstandssonde anschließbaren Konstantstromquelle (6), die durch einen Zeitgeber (8) gesteuert an die Widerstandssonde (3) anschließbar ist, mit durch den Zeitgeber (8) gesteuerten Mitteln zum Erfassen und Speichern der an der Widerstandssonde abfallenden Anfangsspannung zu einem Anfangszeitpunkt und der Meßspannung zu einem definierten Zeitpunkt nach Anschluß der Konstantstromquelle sowie mit Mitteln (11) zum Auswerten dieser Spannungen durch Subtraktion der Meßspannung von der Anfangsspannung und gegebenenfalls Umkehr der Differenz zum Bilden einer dem Niveau entsprechenden Anzeigespannung, dadurch gekennzeichnet, daß zum Ausgleich des Einflusses der Niveauänderung der Flüssigkeit durch Wärmeausdehnung in Abhängigkeit von ihrer Anfangstemperatur auf die Anzeigespannung die Widerstandssonde (3) entlang ihrer Eintauchlänge mit einer solchen Widerstandsverteilung versehen ist, daß die Anzeigespannung-Umgebungstemperatur-Kennlinie der Widerstandssonde (3) bei maximalem Füllstand parallel oder ungefähr parallel zu der Anzeigespannung-Umgebungstemperatur-Kennlinie bei minimalem Füllstand verläuft, und daß zum Ausgleich unterschiedlichen Wärmeübergangs von der Widerstandssonde (3) auf die Flüssigkeit in Abhängigkeit von der Anfangstemperatur eine Subtrahierschaltung (14 bis 18 in Figur 4) zur Bildung einer Korrekturspannung durch Subtraktion von Anfangsspannung und einer Referenzspannung sowie zur Subtraktion der Korrekturspannung von der Anzeigespannung vorhanden ist.

2. Einrichtung nach Anspruch 1, dadurch gekennzeichnet, daß die Widerstandssonde (3) aus einem Widerstandsdraht mit einem oberen Abschnitt (3a), in dem bezogen auf die Abschnittslänge die Widerstandsdrahtlänge (4a) klein ist, und einem unteren Abschnitt (3b), in dem bezogen auf die Abschnittslänge die Widerstandsdrahtlänge (4b) groß ist, besteht.

3. Einrichtung nach Anspruch 2, dadurch gekennzeichnet, daß der obere Abschnitt der Widerstandssonde (3a) in dem Bereich des Behälters zwischen dem maximalen und minimalen Niveau bei maximaler Temperatur angeordnet ist und der untere Abschnitt (3b) in dem Bereich des Behälters unterhalb des minimalen Niveaus bei maximaler Temperatur angeordnet ist.

4. Einrichtung nach einem der Ansprüche 1 bis 3, dadurch gekennzeichnet, daß als Subtrahierschaltung eine analoge Rechenschaltungsanordnung mit einer ersten Subtrahiereinrichtung (14) vorgesehen ist, in der die mit einem Faktor bewertete Differenz zwischen der Anfangsspannung und einer festen Referenzspannung als Korrekturspannung gebildet wird, und daß ein Ausgang (17) der ersten Subtrahiereinrichtung (14) mit einem Eingang einer zweiten Subtrahiereinrichtung (18) zur Bildung der Differenz zwischen der ursprünglichen Anzeigespannung und der Korrekturspannung als korrigierte Anzeigespannung verbunden ist.

5. Einrichtung nach Anspruch 4, dadurch gekennzeichnet, daß zur Speicherung der Anfangsspannung, aus der die Korrekturspannung gebildet wird, eine über eine monostabile Kippstufe (21) gesteuerte Abtast- und Speicherschaltungsanordnung (9a) vorgesehen ist, in der die Anfangsspannung an der Widerstandssonde (3) vor dem Einschalten der Widerstandssonde (3) einspeicherbar ist.

**Claims**

1. Apparatus for the electrical monitoring of the level of a liquid contained in a tank, with a temperature-dependent resistance probe (3) which is immersed into the liquid whose level is to be monitored, with a constant-current source (6) which is connectable to the resistance probe and which is connectable with control by a timer (8) to the resistance probe (3), with means controlled by the timer (8) for detecting and storing the initial voltage occurring at the resistance probe at an initial instant and the measurement voltage at a well-defined instant after connection of the constant-current source, also with means (11) for evaluating these voltages by subtraction of the measurement voltage from the initial voltage and where appropriate reversing the difference for forming a display voltage corresponding to the level, characterised in that, for compensating for the influence of the liquid level change through thermal expansion in dependence on its initial temperature on the display voltage, the resistance probe (3) is provided along its immersion length with such a resistance distribution that the display voltage/ambient temperature characteristic of the resistance probe (3) at the maximum state of fullness extends parallel to or approximately parallel to the display voltage/ambient temperature characteristic at the minimum state of fullness, and that for compensating for variations in heat transfer from the resistance probe (3) to the liquid in dependence on the initial temperature a subtraction circuit (14 to 18 in Fig. 4) is provided for forming a correction voltage by subtraction of initial voltage and a reference voltage, and also for subtraction of the correction voltage from the display voltage.

2. Apparatus according to claim 1, characterised in that the resistance probe (3) consists of a resistance wire with an upper section (3a) in which the resistance wire length (4a) is small in relation to the section length, and a lower section (3b) wherein the resistance wire length (4b) is great in relation to the section length.

3. Apparatus according to claim 2, characterised in that the upper section of the resistance probe (3a) is arranged in the region of the tank between the maximum and minimum levels at maximum temperature, and the lower section (3b) is arranged in the region of the tank below the minimum level at maximum temperature.

4. Apparatus according to one of claims 1 to 3, characterised in that as the subtraction circuit there is provided an analog computing circuit arrangement with a first subtracting element (14) wherein the difference, rated with a factor, between the initial voltage and a fixed reference voltage is formed as correction voltage, and that an output (17) of the first subtracting element (14) is connected to an input of a second subtracting element (18) for forming the difference between the original display voltage and the correction voltage as a corrected display voltage.

5. Apparatus according to claim 4, characterised in that for storing the initial voltage from which the correction voltage is formed, there is provided a sensing and storage circuit arrangement (9a) which is controlled by means of a monostable flipflop (21) and in which it is possible to store the initial voltage at the resistance probe (3) before the resistance probe (3) is switched on.

## Revendications

1. Dispositif de surveillance électrique du niveau d'un liquide contenu dans un récipient, comportant une sonde (3) dont la résistance dépend de la température et qui plonge dans le liquide dont le niveau doit être surveillé, une source (6) de courant constant pouvant être reliée à la sonde à résistance et qui peut ainsi être reliée sous la commande d'une minuterie (8) à la sonde (3) à résistance, des moyens, commandés par la minuterie (8), pour capter et mémoriser à un instant initial la tension initiale diminuant dans la sonde à résistance et à un instant défini la tension de mesure après connexion de la source de courant constant, ainsi que des moyens (11) pour traiter lesdites tensions par soustraction de la tension de mesure de la tension initiale, et le cas échéant par inversion de la différence pour former une tension d'indication correspondant au niveau, dispositif caractérisé en ce que, pour comparer l'influence de la variation de niveau du liquide, due à la dilatation thermique en fonction de sa température initiale, sur la tension d'indication, la sonde (3) à résistance est pourvue, le long de sa longueur immergée, d'une répartition de résistance telle que la courbe caractéristique représentant la tension d'indication, en fonction de la température ambiante, de la sonde (3) à résistance ait, pour un niveau maximal de remplissage, un profil parallèle ou approximativement parallèle à celui de la courbe caractéristique représentant la tension d'indication en fonction de la température ambiante pour le niveau minimal de remplissage, et en ce que, pour une compensation de différences de transmission de chaleur de la sonde (3) à résistance au liquide en fonction de la température initiale, il est prévu un circuit de soustraction (14 à 18 sur la figure 4) pour produire une tension de correction par soustraction de la tension initiale et d'une tension de référence ainsi que pour soustraire la tension de correction de la tension d'indication.

2. Dispositif selon la revendication 1, caractérisé en ce que la sonde (3) à résistance se compose d'un fil résistant comportant une partie supérieure (3a), dans laquelle la longueur de fil résistant (4a) est petite par rapport à la longueur de ladite partie, ainsi qu'une partie inférieure (3b), dans laquelle la longueur de fil résistant (4b) est grande par rapport à la longueur de ladite partie.

3. Dispositif selon la revendication 2, caractérisé en ce que la partie supérieure de la sonde à résistance (3a) est disposée dans la zone du récipient qui est comprise entre le niveau maximal et le niveau minimal pour la température maximale et en ce que la partie inférieure (3b) est disposée dans la zone du récipient qui est située en dessous du niveau minimal pour la température maximale.

4. Dispositif selon l'une des revendications 1 à 3, caractérisé en ce qu'il est prévu comme circuit de soustraction un circuit analogique de calcul comportant un premier dispositif de soustraction (14), dans lequel la différence, pondérée par un certain facteur, entre la tension initiale et une première tension de référence est établie comme tension de correction et en ce qu'une sortie (17) du premier dispositif de soustraction (14) est reliée à une entrée d'un second dispositif de soustraction (18) pour former la différence entre la tension d'indication initiale et la tension de correction sous la forme d'une tension d'indication corrigée.

5. Dispositif selon la revendication 4, caractérisé en ce que, pour une mémorisation de la tension initiale à partir de laquelle est formée la tension de correction, il est prévu un circuit de captage et mémorisation (9a) commandé par l'intermédiaire d'un étage basculant monostable (21) et dans lequel la tension initiale appliquée à la sonde (3) à résistance peut être mémorisée avant l'enclenchement de la sonde (3) à résistance.

FIG.1

FIG.2

FIG.3

FIG.4

0 029 091

FIG.5